# EUROPEAN PATENT APPLICATION

(11) **EP 4 318 896 A1**
(43) Date of publication of application: **07.02.2024**
(21) Application number: 22780651.0
(22) Date of filing: 25.03.2022
(51) Int. Cl.: H02K 7/08, H02K 21/22, H02K 1/14

(54) **MOTOR, COMPRESSION DEVICE, BLOWING DEVICE, AND FREEZING DEVICE**

(30) Priority: 29.03.2021 JP 2021054833
(71) Applicant: DAIKIN INDUSTRIES, LTD., Osaka 530-0001 (JP)
(72) Inventor: KIDO, Naohiro, Osaka-shi, Osaka 530-8323 (JP); ASANO, Yoshinari, Osaka-shi, Osaka 530-8323 (JP); HIBINO, Hiroshi, Osaka-shi, Osaka 530-8323 (JP)
(74) Representative: Hoffmann Eitle
(86) International application number: PCT/JP2022/014720
(87) International publication number: WO 2022/210439

(57) **Abstract**

A motor 1 according to one embodiment of the present disclosure includes a rotor 10 configured to freely rotate around a rotary shaft member 13; a stator 20, 320 including a stator unit 21 of a claw-pole type, the stator unit including a winding wire 212 that is annularly wound around the rotary shaft member 13 and a stator core 211 provided so as to surround the winding wire 212, the stator core 211 having a through hole piercing the stator core 211 around the rotary shaft member 13; and a first bearing holder 24B provided at one end side of the stator 20 in an axial direction of the rotary shaft member 13 and configured to hold a first bearing 25 rotatably supporting the rotary shaft member 13, wherein the first bearing 25 and the first bearing holder 24B are arranged on an outside in the axial direction with respect to the stator core 211, and an outer diameter of the first bearing 25 or the first bearing holder 24B is larger than an inner diameter of the through hole of the rotary shaft member 13.

## Description

### [Technical Field]

The present disclosure relates to a motor, a compression apparatus, a fan apparatus, and a refrigeration apparatus.

### [Background Art]

For example, a motor whose rotary shaft is supported by a pair of bearings is known (see Patent Document 1).

### [Citation List]

### [Patent Document]

(Patent document 1) Japanese Unexamined Patent Application Publication No. 2005-45890

### [Summary of Invention]

### [Technical Problem]

However, as described in Patent Document 1, in the conventional claw-pole motor, the size of the pair of bearings cannot be increased because a stator is provided outside the pair of bearings in the radial direction.

An object of the present disclosure is to provide a technology capable of improving the load bearing property of a bearing in a claw-pole motor.

### [Solution to Problem]

According to one embodiment of the present disclosure, there is provided a motor including
a rotor configured to freely rotate around a rotary shaft;
a stator including a stator unit of a claw-pole type, the stator unit including a winding wire that is annularly wound around the rotary shaft and a core provided so as to surround the winding wire, the core having a through hole piercing the core around the rotary shaft; and
a first bearing holder provided at one end side of the stator in an axial direction of the rotary shaft and configured to hold a first bearing rotatably supporting the rotary shaft, wherein
the first bearing and the first bearing holder are arranged on an outside in the axial direction with respect to the core, and
an outer diameter of the first bearing or the first bearing holder is larger than an inner diameter of the through hole of the core.

According to the present embodiment, it is possible to provide a technology that can enhance the load bearing property of a bearing in a claw-pole motor.

In the above embodiment,
the outer diameter of the first bearing or the first bearing holder may be larger than an inner diameter of the winding wire, and
a distance in the axial direction between the first bearing holder and the core may be shorter than a difference between a radius of an inner circumference and a radius of an outer circumference of the winding wire.

Thus, according to the present embodiment, the size of the first bearing can be further increased, and the motor can be reduced in size in the axial direction.

In the above embodiment,
the first bearing or the first bearing holder may be in contact with an edge face of the core.

Thus, according to the present embodiment, the motor can be further reduced in size in the axial direction.

In the above embodiment,
a fixing member may be provided on an opposite side of the first bearing with respect to the stator in the axial direction of the rotary shaft, the fixing member being configured to support the stator, and
the stator may be sandwiched by the first bearing holder and the fixing member.

Thus, according to the present embodiment, the movement of the stator in the axial direction of the rotary shaft can be regulated.

In the above embodiment,
the core of the stator unit may be formed by using a compacted body formed by compressing magnetic powder.

Accordingly, according to the present embodiment, by using the compacted body, the heat of the core, which tends to increase in temperature, can be radiated to the first bearing holder.

In the above embodiment,
the stator may include two or more of the stator units that are stacked in the axial direction of the rotary shaft.

Thus, according to the present embodiment, the load bearing property of the bearing can be enhanced by increasing the size of the first bearing which is subjected to a high load due to the long shaft of the rotary shaft.

In the above embodiment,
the rotor may be configured to rotate on an outside of the stator in a radial direction of the rotary shaft.

Thus, according to the present embodiment, the load bearing property of the bearing can be enhanced by increasing the size of the first bearing, which is subjected to a high load due to the weight of the rotor.

In the above embodiment,
a fan attached to an outer surface of the rotor may be provided.

Thus, according to the present embodiment, the load bearing property of the bearing can be enhanced by increasing the size of the first bearing which is subjected to a high load due to the weight of the rotor and the fan.

In the above embodiment,
a second bearing holder may be provided on an opposite side of the first bearing with respect to the stator in the axial direction of the rotary shaft and configured to hold a second bearing rotatably supporting the rotary shaft, wherein
a load applied to the first bearing may be greater than a load applied to the second bearing.

Thus, according to the present embodiment, the load bearing property of the bearing can be enhanced by increasing the size of the first bearing subjected to a load greater than that applied to the second bearing.

In the above embodiment,
an outer diameter of the second bearing or the second bearing holder may be smaller than an inner radius of the winding wire.

Thus, according to the present embodiment, a relatively small second bearing can be used.

In the above embodiment,
the outer diameter of the second bearing or the second bearing holder may be smaller than the inner diameter of the through hole of the core.

Thus, according to the present embodiment, a relatively small second bearing can be used.

Further, according to one embodiment of the present disclosure, there is provided
a compression apparatus including
a compression mechanism configured to compress a fluid by rotating; and
the above motor configured to drive a rotation of the compression mechanism.

According to the present embodiment, it is possible to provide a technology that can enhance the load bearing property of a bearing on a high load side in a claw-pole motor that drives the rotation of a compression mechanism provided in a compression apparatus.

Further, according to one embodiment of the present disclosure, there is provided
a fan apparatus including
an impeller configured to blow air by rotating; and
the above motor configured to rotatably drive the impeller.

According to the present embodiment, it is possible to provide a technology capable of improving the load bearing property of a bearing on a high load side in a claw-pole motor for driving the rotation of an impeller provided with the fan apparatus.

Further, according to one embodiment of the present disclosure, there is provided
a refrigeration apparatus including
the above compression apparatus or the above fan apparatus.

According to the present embodiment, in the refrigeration apparatus, it is possible to provide a technology capable of improving the load bearing property of a bearing on a high load side in a compression mechanism provided in the compression apparatus or in a claw-pole motor for driving the rotation of an impeller provided in the fan apparatus.

### [Brief Description of Drawings]

[FIG. 1] FIG. 1 is a perspective view illustrating an outline of a motor according to an embodiment.
[FIG. 2] FIG. 2 is a perspective view illustrating an example of a configuration of a stator according to an embodiment.
[FIG. 3] FIG. 3 is an exploded view illustrating an example of a configuration of a stator unit according to an embodiment.
[FIG. 4] FIG. 4 is a longitudinal sectional view illustrating an example of a configuration of a motor according to an embodiment.
[FIG. 5] FIG. 5 is a longitudinal sectional view illustrating an example of a configuration of the motor according to the first embodiment.
[FIG. 6] FIG. 6 is a longitudinal sectional view illustrating an example of a configuration of the motor according to the second embodiment.
[FIG. 7] FIG. 7 is a longitudinal sectional view illustrating an example of a configuration of the motor according to the third embodiment.
[FIG. 8] FIG. 8 is a longitudinal sectional view illustrating an example of a configuration of the fan apparatus according to an embodiment.
[FIG. 9] FIG. 9 is a longitudinal sectional view illustrating an example of a configuration of the motor according to another embodiment.
[FIG. 10] FIG. 10 is a longitudinal sectional view illustrating a modified example of the motor according to another embodiment.
[FIG. 11] FIG. 11 is a longitudinal sectional view illustrating an example of a configuration of a fan apparatus according to an embodiment.
[FIG. 12] FIG. 12 is a longitudinal sectional view illustrating an example of a configuration of a compression apparatus according to an embodiment.
[FIG. 13] FIG. 13 is a schematic view illustrating a configuration of a refrigeration apparatus according to an embodiment.

### [Description of Embodiments]

Embodiments will be described below with reference to the drawings.

### [Basic configuration of motor 1]

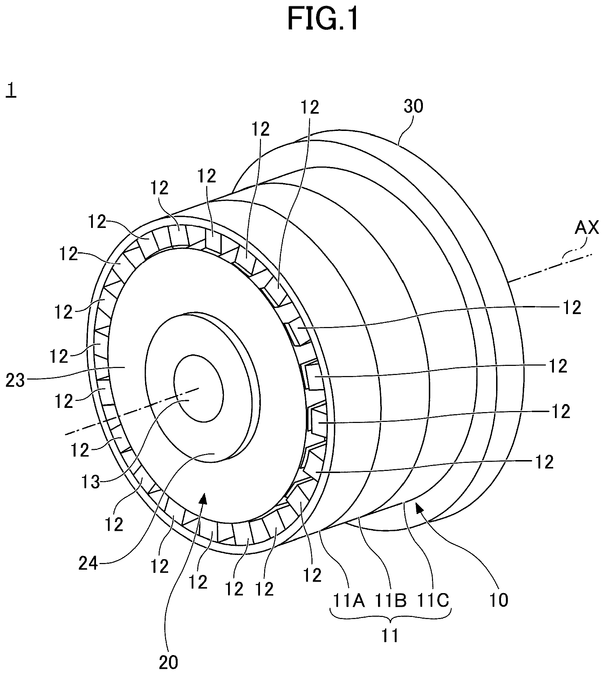

First, the basic configuration of a motor 1 according to the present embodiment will be described with reference to FIGS. 1 to 4.

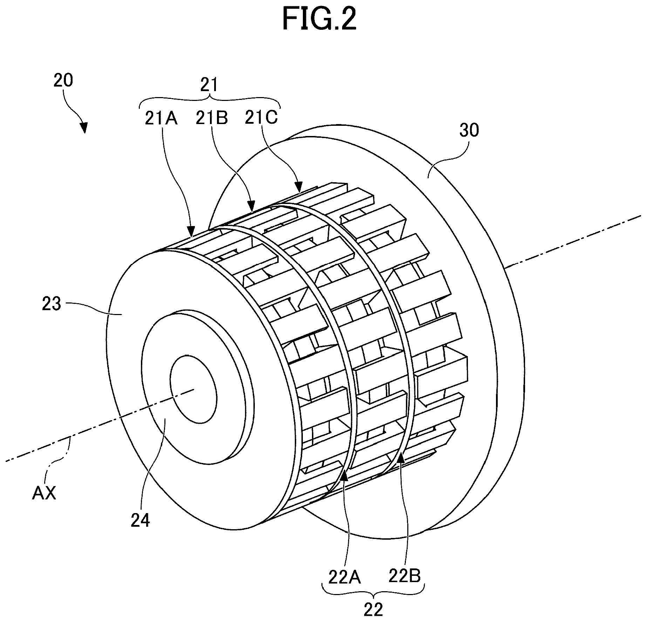

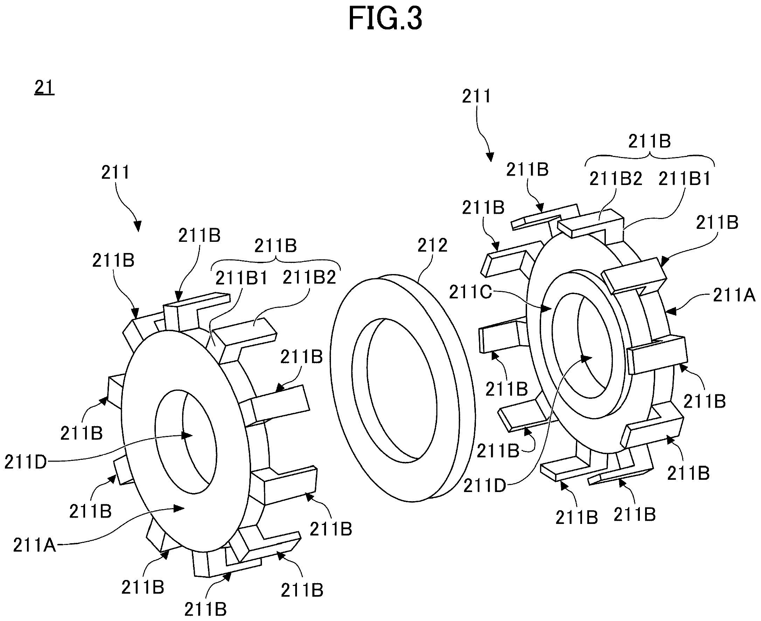

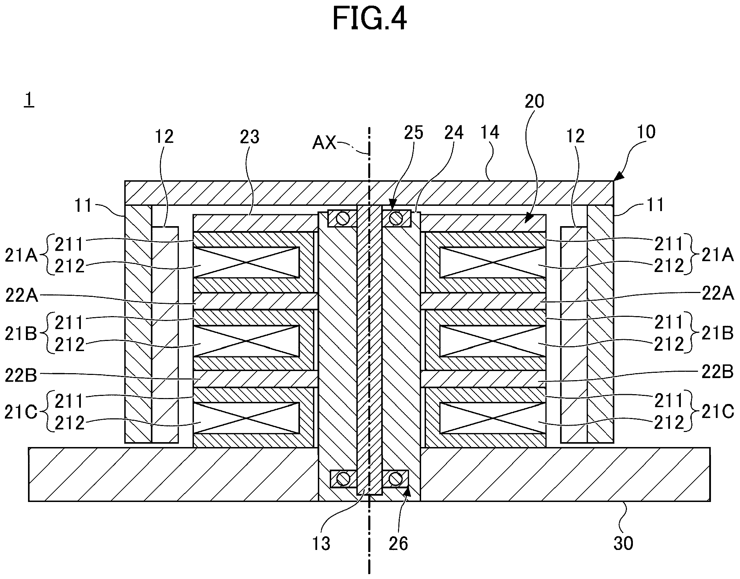

FIG. 1 is a perspective view illustrating an outline of the motor 1 according to an embodiment. In FIG. 1, a coupling member 14 provided in a rotor 10 is not illustrated. FIG. 2 is a perspective view illustrating an example of the configuration of a stator 20 according to an embodiment. In FIG. 2, the rotor 10 (a rotor core 11, a permanent magnet 12, a rotary shaft member 13, and the coupling member 14) is not illustrated. FIG. 3 is an exploded view illustrating an example of the configuration of a stator unit 21 according to an embodiment. FIG. 4 is a longitudinal sectional view illustrating an example of the configuration of the motor 1 according to an embodiment.

The motor 1 illustrated in FIGS. 1 to 4 is a so-called outer rotor type claw-pole motor. The motor 1 is driven by armature currents of multiple phases (in this example, three phases). The motor 1 is used for a fan apparatus, a refrigeration apparatus, etc.

As illustrated in FIGS. 1 to 4, the motor 1 includes the rotor 10, the stator 20, and a fixing member 30.

As illustrated in FIGS. 1 to 4, the rotor 10 is arranged outside the stator 20 in the radial direction of the motor 1 (hereinafter, simply "radial direction") and is configured to rotate about a rotation axis AX. The rotor 10 includes the rotor core 11, a plurality (in this example, 20 units) of the permanent magnets 12, and the rotary shaft member 13. The rotor 10 is sometimes referred to as a *"rotor"* (as represented by Japanese katakana characters).

The rotor core 11 has, for example, a substantially cylindrical shape and is arranged so that the rotation axis AX of the motor 1 and the cylindrical axis are substantially coincident. The rotor core 11 has a length substantially equivalent to that of the stator 20 in the axial direction of the motor 1 (hereinafter, simply "axial direction"). The rotor core 11 is formed of, for example, a steel plate, cast iron, or a compacted magnetic core. In the example illustrated in FIG. 1, the rotor core 11 is formed of a plurality of (in this example, three) rotor cores 11A to 11C stacked in the axial direction. However, the rotor core 11 may be formed of one member in the axial direction. The rotor core 11 is sometimes referred to as a *"rotor core"* (as represented by Japanese katakana characters).

The plurality of (in this example, 20 units) permanent magnets 12 are arranged at equal intervals in the circumferential direction on the inner peripheral surface of the rotor core 11. Each of the plurality of permanent magnets 12 is formed so as to exist between substantially one end and substantially the other end of the rotor core 11 in the axial direction. The permanent magnets 12 are, for example, neodymium sintered magnets or ferrite magnets.

Each of the plurality of permanent magnets 12 is magnetized with different magnetic poles at either end portion in the radial direction. The two permanent magnets 12 adjacent to each other in the circumferential direction, among the plurality of permanent magnets 12, are magnetized with different magnetic poles from each other, on the inside in the radial direction facing the stator 20. Therefore, the permanent magnets 12 magnetized with N poles on the inside in the radial direction and the permanent magnets 12 magnetized with S poles on the inside in the radial direction, are alternately arranged in the circumferential direction, outside the radial direction of the stator 20.

Each of the plurality of permanent magnets 12 may be formed of one magnet member in the axial direction, or a plurality of magnet members divided in the axial direction (for example, three corresponding to the number of members of the rotor core 11 to be stacked). In this case, the plurality of magnet members forming the permanent magnet 12 divided in the axial direction are all magnetized with the same magnetic pole on the inside in the radial direction facing the stator 20.

The plurality of permanent magnets 12 arranged in the circumferential direction may be replaced with a permanent magnet formed of one member in the circumferential direction, for example, an annular ring magnet or a plastic magnet that is magnetized with different magnetic poles alternately in the circumferential direction. In this case, the permanent magnet formed of one member in the circumferential direction may be formed of one member also in the axial direction, and may be formed of one member as a whole. The permanent magnet formed of one member in the circumferential direction may be divided into a plurality of members in the axial direction as in the case of the plurality of permanent magnets 12. When a plastic magnet formed of one member in the circumferential direction is adopted, the rotor core 11 may be omitted.

The rotary shaft member 13 has a substantially cylindrical shape, for example, and is arranged so that the rotation axis AX of the motor 1 and the cylindrical shaft center are substantially coincident. The rotary shaft member 13 is rotatably supported by bearings 25 and 26 (see FIG. 4) provided at both ends in the axial direction of an insertion member 24, for example. The insertion member 24 is fixed to the fixing member 30. Thus, the rotary shaft member 13 can rotate about the rotation axis AX with respect to the fixing member 30. For example, the rotary shaft member 13 is coupled to the rotor core 11 by the coupling member 14 (see FIG. 4) at the end portion opposite to the end portion on the fixing member 30 side of the motor 1 in the axial direction (hereinafter, conveniently described as the "leading end portion of the motor 1").

The coupling member 14 has, for example, a substantially circular disk shape that closes the open end portion of the substantially cylindrical shape of the rotor core 11. Thus, the rotor core 11 and the plurality of permanent magnets 12 fixed to the inner peripheral surface of the rotor core 11 can rotate about the rotation axis AX of the motor 1 with respect to the fixing member 30 in accordance with the rotation of the rotary shaft member 13.

As illustrated in FIGS. 1 to 4, the stator 20 is arranged radially inside the rotor core 11 and the permanent magnets 12 provided in the rotor 10. The stator 20 includes a plurality of (in this example, three) the claw-pole-shaped stator units 21, a plurality of (in this example, two) interphase members 22, an end portion member 23, and the insertion member 24. The stator 20 is sometimes referred to as a *"stator"* (as represented by Japanese katakana characters).

As illustrated in FIG. 3, the stator unit 21 includes a pair of stator cores 211 and a winding wire 212.

The two stator cores 211 are provided so as to surround the winding wire 212. The stator cores 211 are formed of, for example, compacted magnetic cores. The stator core 211 includes a yoke portion 211A, a plurality of claw magnetic poles 211B, a yoke portion 211C, and an insertion hole 211D. The pair of stator cores 211 is sometimes referred to as *"stator cores"* (as represented by Japanese katakana characters).

The yoke portion 211A has an annular shape as viewed in a axial direction and a predetermined thickness in the axial direction.

The plurality of claw magnetic poles 211B are arranged at equal intervals in the circumferential direction on the outer peripheral surface of the yoke portion 211A, and each of the claw magnetic poles 211B protrudes radially outward from the outer peripheral surface of the yoke portion 211A. The claw magnetic poles 211B include a claw magnetic pole portion 211B1 and a claw magnetic pole portion 211B2.

The claw magnetic pole portion 211B1 has a predetermined width and protrudes from the outer peripheral surface of the yoke portion 211A by a predetermined length.

The claw magnetic pole portion 211B2 projects from the tip of the claw magnetic pole portion 211B1 toward the other one of the two stator cores 211 by a predetermined length in the axial direction. For example, as illustrated in FIG. 3, the claw magnetic pole portion 211B2 may have a constant width regardless of the distance from the claw magnetic pole portion 211B1. For example, the claw magnetic pole portion 211B2 may have a tapered shape that narrows in width as the distance is further away from the claw magnetic pole portion 211B1 in the axial direction. Because the motor 1 has the claw magnetic pole portion 211B2, it is possible to secure a relatively wide opposing area between the magnetic pole surface of the claw magnetic pole 211B magnetized by the armature current of the winding wire 212 and the rotor 10. Therefore, the motor 1 can relatively increase the torque of the motor 1, thereby increasing the output of the motor 1. Note that the claw magnetic pole portion 211B2 may be omitted.

The yoke portion 211C is configured such that a portion near the inner peripheral surface of the yoke portion 211A projects toward the other one of the two stator cores 211 by a predetermined amount, and has, for example, an annular shape having an outer diameter smaller than that of the yoke portion 211A as viewed in the axial direction. Therefore, the two stator cores 211 come into contact with each other at the yoke portion 211C, and a space for accommodating the winding wire 212 is created between the two yoke portions 211A corresponding to the two stator cores 211.

The insertion member 24 is inserted into the insertion hole 211D. The insertion hole 211D is realized by the inner peripheral surfaces of the yoke portion 211A and the yoke portion 211C.

The winding wire 212 is annularly wound in the axial view. One end of the winding wire 212 is electrically connected to an external terminal, and the other end portion is electrically connected to a neutral point. The winding wire 212 is arranged between the two stator cores 211 (the yoke portions 211A) in the axial direction. The winding wire 212 is wound so that the inner peripheral part is radially outward from the yoke portion 211C of the pair of stator cores 211. The winding wire 212 is sometimes referred to as a "coil".

As illustrated in FIG. 2, the two stator cores 211 are combined so that the claw magnetic pole 211B of one stator core 211 and the claw magnetic pole 211B of the other stator core 211 are alternately arranged in the circumferential direction. When an armature current flows through the annular winding wire 212, the claw magnetic pole 211B formed on one of the two stator cores 211 and the claw magnetic pole 211B formed on the other are magnetized to magnetic poles different from each other. Thus, in the pair of stator cores 211, one claw magnetic pole 211B protruding from one stator core 211 has a magnetic pole different from the other claw magnetic pole 211B which is adjacent in the circumferential direction and which protrudes from the other stator core 211. Therefore, due to the armature current flowing in the winding wire 212, the claw magnetic pole 211B of the N pole and the claw magnetic pole 211B of the S pole are alternately arranged in the circumferential direction of the pair of stator cores 211.

As illustrated in FIGS. 2 and 4, the plurality of stator units 21 are stacked in the axial direction. The plurality of stator units 21 includes the stator units 21 corresponding to a plurality of phases (in this example, three phases). Specifically, the plurality of stator units 21 includes the stator unit 21A corresponding to the U phase, the stator unit 21B corresponding to the V phase, and the stator unit 21C corresponding to the W phase. The plurality of stator units 21 are stacked in the order of the stator unit 21A corresponding to the U phase, the stator unit 21B corresponding to the V phase, and the stator unit 21C corresponding to the W phase from the leading end portion of the motor 1. The stator units 21A to 21C are arranged so that the positions thereof in the circumferential direction differ from each other by 120° in electric angle.

The motor 1 may be driven by a two-phase armature current or by an armature current of four or more phases.

The interphase member 22 is provided between axially adjacent stator units 21 of different phases. The interphase member 22 is, for example, a nonmagnetic material. Thus, a predetermined distance can be secured between the two stator units 21 of different phases, and magnetic flux leakage between the two stator units 21 of different phases can be prevented. The interphase member 22 includes a UV interphase member 22A and a VW interphase member 22B.

The UV interphase member 22A is provided between the stator unit 21A of the U phase and the stator unit 21B of the V phase, which are adjacent in the axial direction. The UV interphase member 22A has, for example, a substantially cylindrical shape (substantially circular plate shape) having a predetermined thickness, and an insertion hole through which the insertion member 24 is inserted is formed in the center portion. The same may apply to the VW interphase member 22B.

The VW interphase member 22B is provided between the stator unit 21B of the V phase and the stator unit 21 C of the W phase, which are adjacent in the axial direction.

The end portion member 23 is provided at an end portion part on the leading end side of the motor 1 including the plurality of stator units 21 that are stacked. Specifically, the end portion member 23 is provided so as to contact an edge face of the stator unit 21A, on the side opposite to the side facing the stator unit 21B in the axial direction. The end portion member 23 has, for example, a substantially cylindrical shape (substantially circular plate shape) having a predetermined thickness, and an insertion hole through which the insertion member 24 is inserted is formed in the center portion. The end portion member 23 is, for example, a nonmagnetic material. Thus, magnetic flux leakage from the stator unit 21A (specifically, the stator core 211 on the leading end side of the motor 1) can be prevented.

In the insertion member 24, the end portion member 23, the stator unit 21A, the UV interphase member 22A, the stator unit 21B, the VW interphase member 22B, and the stator unit 21C are inserted in order from the leading end side of the motor 1, and the leading end portion is fixed to the fixing member 30. The insertion member 24 has, for example, a male screw portion at the leading end portion and is fixed to the fixing member 30 by being fastened to the corresponding female screw portion of the fixing member 30.

The insertion member 24 has, for example, a substantially cylindrical shape, and the rotary shaft member 13 is rotatably arranged in the hole portion realized by the inner peripheral surface. The bearings 25 and 26 rotatably supporting the rotary shaft member 13 are provided at both ends of the insertion member 24 in the axial direction.

The insertion member 24 has a head having an outer diameter relatively larger than the inner diameter of the insertion hole 211D of the stator unit 21 at the leading end portion of the motor 1. Thus, for example, the insertion member 24 is tightened to a certain extent to the fixing member 30, so that a force in the direction from the head toward the fixing member 30 in the axial direction can be applied to the end portion member 23. Therefore, the plurality of the stator units 21 (the stator units 21A to 21C) and the interphase member 22 (the UV interphase member 22A, the VW interphase member 22B) can be fixed to the fixing member 30 in the form of being sandwiched between the end portion member 23 and the fixing member 30. The strength of the compacted magnetic core is relatively low against tensile stress, while the strength against compressive stress is relatively high. Therefore, with the compressive stress being applied to the stator core 211 formed by the compacted magnetic core, the stator units 21A to 21C can be fixed to the fixing member 30.

The fixing member 30 has, for example, a substantially disk shape having an outer diameter larger than that of the rotor 10 (the rotor core 11) in the axial direction, and has a predetermined thickness in the axial direction. As illustrated in FIG. 4, the rotor 10 is rotatably supported on the fixing member 30 through the insertion member 24, and the stator 20 is fixed.

### [First embodiment]

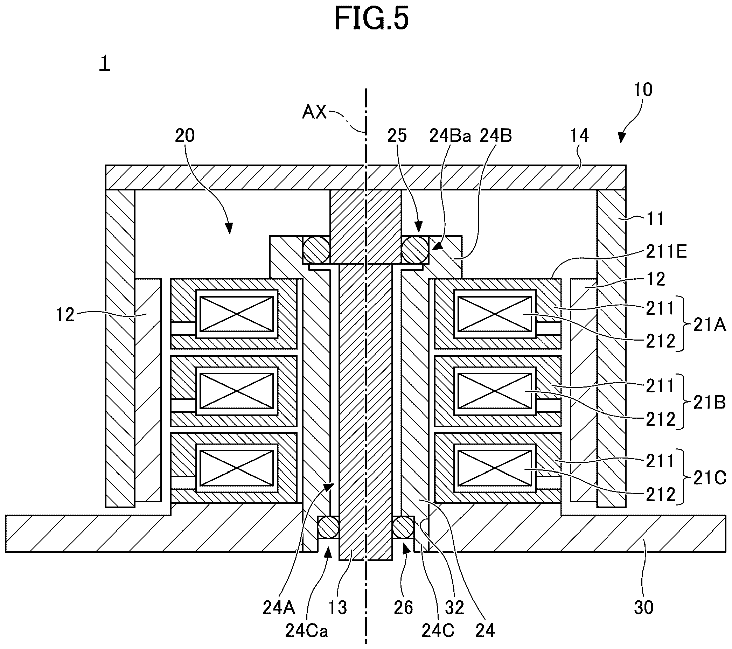

Next, a structure unique to the motor 1 according to the first embodiment will be described with reference to FIG. 5. FIG. 5 is a longitudinal sectional view illustrating an example of the configuration of the motor 1 according to the first embodiment.

As illustrated in FIG. 5, in the motor 1 according to the first embodiment, the insertion member 24 of the stator 20 has a hollow structure, that is, the insertion member 24 has an inner space 24A around the rotation axis AX.

The rotary shaft member 13 of the rotor 10 is arranged in the inner space 24A. Both ends of the rotary shaft member 13 in the axial direction are rotatably supported bearings, that is, one end portion is rotatably supported by a first bearing 25 provided on one end side (on the side of the coupling member 14) of the insertion member 24 in the axial direction of the rotary shaft member 13, and the other end portion is rotatably supported by a second bearing 26 provided on the other end side (on the side of the fixing member 30) of the insertion member 24 in the axial direction of the rotary shaft member 13.

The first bearing 25 is held by a first bearing holder 24B provided on one end side (on the side of the coupling member 14) of the insertion member 24 in the axial direction of the rotary shaft member 13. Specifically, the first bearing holder 24B has a circular opening 24Ba centered on the rotation axis AX. The inner diameter of the opening 24Ba is slightly smaller than the outer diameter of the first bearing 25. Thus, the first bearing holder 24B can hold the first bearing 25 by pressing the first bearing 25 into the opening 24Ba.

The second bearing 26 is held by a second bearing holder 24C provided on the other end side (the side of the fixing member 30) of the insertion member 24 in the axial direction of the rotary shaft member 13. Specifically, the second bearing holder 24C has a circular opening 24Ca centered on the rotation axis AX. The inner diameter of the opening 24Ca is slightly smaller than the outer diameter of the second bearing 26. Thus, the second bearing holder 24C can hold the second bearing 26 by pressing the second bearing 26 into the opening 24Ca. The first bearing 25 and the second bearing 26 are a rolling bearing, a gas bearing, a magnetic bearing, a sliding bearing, and the like.

As illustrated in FIG. 5, the outer diameter of the second bearing holder 24C is equal to the outer diameter of the other parts of the insertion member 24 (the parts excluding the first bearing holder 24B). On the other hand, the outer diameter of the first bearing holder 24B is larger than the outer diameter of the other parts of the insertion member 24 (the parts excluding the first bearing holder 24B). That is, in the insertion member 24, the first bearing holder 24B has a shape in which the outer diameter is partially enlarged.

As illustrated in FIG. 5, the outer diameter of the first bearing holder 24B is larger than the inner diameter of the through hole of the stator core 211. Accordingly, the first bearing holder 24B overlaps a part of an end portion surface 211E facing the coupling member 14 of the stator core 211 farthest from the fixing member 30 in the axial view.

Thus, the outer diameter of the first bearing holder 24B is made larger than the inner diameter of the through hole of the stator core 211, and, therefore, the motor 1 according to the first embodiment can hold the relatively large-sized first bearing 25 by the first bearing holder 24B.

For example, in the example illustrated in FIG. 5, the outer diameter of the second bearing 26 is smaller than the inner diameter of the through hole of the stator core 211. On the other hand, the outer diameter of the first bearing 25 is substantially equal to the inner diameter of the through hole of the stator core 211.

Therefore, the motor 1 according to the first embodiment can increase the size of the first bearing 25, which is a high-load side because the first bearing 25 is close to the center of gravity side of the rotor 10, particularly when the motor 1 is installed sideways, that is, the inner diameter of the first bearing can be increased. Therefore, the load bearing property of the first bearing 25 can be increased.

The outer diameter of the first bearing 25 may be larger than the inner diameter of the through hole of the stator core 211 or smaller than the inner diameter of the through hole of the stator core 211.

Further, in the motor 1 according to the first embodiment, the insertion member 24 has a shape in which the outer diameter of the first bearing holder 24B is partially enlarged, and, therefore, the outer diameter of other parts of the insertion member 24 (parts excluding the first bearing holder 24B) can be relatively reduced. Therefore, in the motor 1 according to the first embodiment, the size in the radial direction of the winding wire 212 arranged in the space surrounded by the stator 20 can be increased.

Furthermore, as illustrated in FIG. 5, the first bearing holder 24B (a surface facing the end portion surface 211E) is in contact with the end portion surface 211E facing the coupling member 14 of the stator core 211 farthest from the fixing member 30. Thus, the motor 1 according to the first embodiment can regulate the movement of the plurality of stator units 21 in the axial direction of the rotation axis AX.

Note that the first bearing holder 24B (the surface facing the end portion surface 211E) may not be in contact with the end portion surface 211E, and may be separated from the end portion surface 211E by a small separation distance (for example, less than 1 mm) .

As illustrated in FIG. 5, the motor 1 according to the first embodiment has the fixing member 30 for supporting the insertion member 24 on the other end side of the insertion member 24 (opposite side of the first bearing 25) in the axial direction of the rotary shaft member 13. In the motor 1 according to the first embodiment, a plurality of stator units 21 are sandwiched by the first bearing holder 24B and the fixing member 30.

Accordingly, the motor 1 according to the first embodiment can more surely regulate the movement of the plurality of stator units 21 in the axial direction of the rotation axis AX, and thus can more stably fix the plurality of stator units 21.

The motor 1 according to the first embodiment is a claw-pole motor, and, therefore, the winding radial direction of the winding wire 212 is orthogonal to the axial direction of the rotation axis AX, unlike the conventional centralized winding stator (the winding radial direction of the winding wire is parallel to the axial direction). That is, in the motor 1 according to the first embodiment, the winding wire 212 does not protrude from the end face of the stator core 211 in the axial direction of the rotation axis AX. Therefore, the motor 1 according to the first embodiment can realize a configuration in which the "first bearing holder 24B is in contact with the end portion surface 211E" and a configuration in which the "a plurality of stator units 21 are sandwiched by the first bearing holder 24B and the fixing member 30", that had not been realized by the conventional centralized winding stator.

In the motor 1 according to the first embodiment, the outer diameter of the other end side (the side of the fixing member 30) of the insertion member 24 is slightly smaller than the inner diameter of the through hole of the stator core 211. Therefore, when the motor 1 according to the first embodiment is assembled, the other end side (the side of the fixing member 30) of the insertion member 24 can be inserted into the through hole of the stator core 211 through the opening on the side of the coupling member 14 of the through hole. Further, by engaging the other end portion of the insertion member 24 with the opening 32 of the fixing member 30 by any engagement method (for example, press-fitting, screwing, burning, etc.), the motor 1 according to the first embodiment can fix the other end portion of the insertion member 24 to the fixing member 30 and simultaneously sandwich the plurality of stator units 21 by the first bearing holder 24B and the fixing member 30.

As illustrated in FIG. 5, in the motor 1 according to the first embodiment, the stator 20 has two or more stator units 21 (three in one embodiment) stacked in the axial direction of the rotation axis AX.

Accordingly, in the motor 1 according to the first embodiment, the length of the rotary shaft member 13 in the axial direction of the rotation axis AX increases, and, therefore, the center of gravity of the rotor 10 tends to be more biased toward the first bearing 25, and thus, the usefulness of increasing the size of the first bearing 25 close to the center of gravity of the rotor 10 can be enhanced.

As illustrated in FIG. 5, in the motor 1 according to the first embodiment, the rotor 10 rotates outside the stator 20 in the radial direction of the rotation axis AX.

Accordingly, in the motor 1 according to the first embodiment, the center of gravity of the rotor 10 tends to be more biased toward the first bearing 25 by the weight of the rotor 10, particularly when the motor 1 is installed sideways, and, therefore, the usefulness of increasing the size of the first bearing 25 close to the center of gravity of the rotor 10 can be further enhanced.

In the motor 1 according to the first embodiment, the inner diameter of the first bearing 25 is larger than the inner diameter of the second bearing 26. Therefore, in the motor 1 according to the first embodiment, the outer diameter of the end portion of the rotary shaft member 13 on the side of the first bearing 25 is larger than the outer diameter of the end portion on the side of the second bearing 26.

Particularly, in the motor 1 according to the first embodiment, the outer diameter of the middle portion (the portion between the end portion on the side of the first bearing 25 and the end portion on the side of the second bearing 26) of the rotary shaft member 13 is equal to the outer diameter of the end portion on the side of the second bearing 26. That is, in the motor 1 according to the first embodiment, the rotary shaft member 13 has an overall small diameter and a partially thick end portion on the side of the first bearing 25 (so-called stepped shape).

Thus, in the motor 1 according to the first embodiment, the outer diameter of the insertion member 24 (the portion excluding the first bearing holder 24B) can be relatively reduced by making the rotary shaft member 13 have an overall small diameter. Therefore, the motor 1 according to the first embodiment can increase the size in the radial direction of the winding wire 212 arranged in the space surrounded by the stators 20.

In the motor 1 according to the first embodiment, the stator core 211 of the stator unit 21 uses a compacted body formed by compressing magnetic powder.

Accordingly, in the motor 1 according to the first embodiment, the stator core 211 receives heat generated by the winding wire 212 and tends to reach a high temperature, but the first bearing holder 24B is close to the stator core 211, and, therefore, the heat of the stator core 211 can be radiated to the first bearing holder 24B (insertion member).

### [Second embodiment]

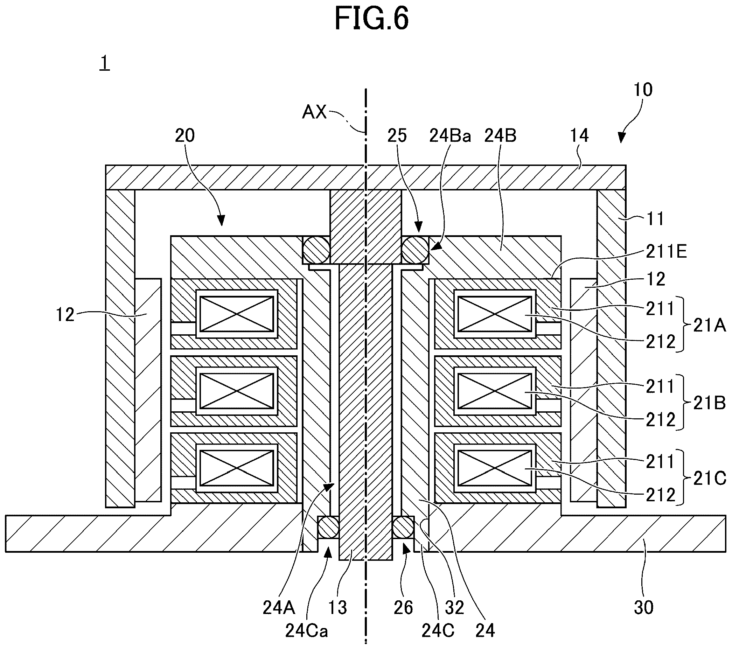

Next, a structure unique to the motor 1 according to the second embodiment will be described with reference to FIG. 6. FIG. 6 is a longitudinal sectional view illustrating an example of the configuration of the motor 1 according to the second embodiment. Hereinafter, with regard to the motor 1 according to the second embodiment, changes from the motor 1 according to the first embodiment will be described.

As illustrated in FIG. 6, the outer diameter of the first bearing holder 24B of the motor 1 according to the second embodiment is larger than that of the motor 1 according to the first embodiment. Specifically, in the motor 1 according to the second embodiment, the first bearing holder 24B is longer than the inner diameter of the winding wire 212, and is arranged at a distance shorter than the difference between the radius of the inner circumference and the radius of the outer circumference of the winding wire 212 in the axial direction with respect to the stator core 211, and is substantially equal to the outer diameter of the stator core 211.

Accordingly, the motor 1 according to the second embodiment can expand the contact area between the first bearing holder 24B and the end portion surface 211E facing the coupling member 14 of the stator core 211 farthest from the fixing member 30, and thus can more surely regulate the movement of the plurality of stator units 21 in the axial direction of the rotation axis AX.

Further, the motor 1 according to the second embodiment can further enhance the heat radiation effect from the stator core 211 to the first bearing holder 24B (the insertion member 24) by expanding the contact area between the first bearing holder 24B and the end portion surface 211E.

Note that the motor 1 according to the second embodiment is a claw-pole motor, and, therefore, the winding wire 212 does not protrude from the end face of the stator core 211. Therefore, in the motor 1 according to the second embodiment, the first bearing holder 24B can be "arranged at a distance shorter than the difference between the radius of the inner circumference and the radius of the outer circumference of the winding wire in the axial direction with respect to the stator core 211", which cannot be realized by the conventional centralized winding stator, and the motor 1 can be reduced in size in the axial direction.

### [Third embodiment]

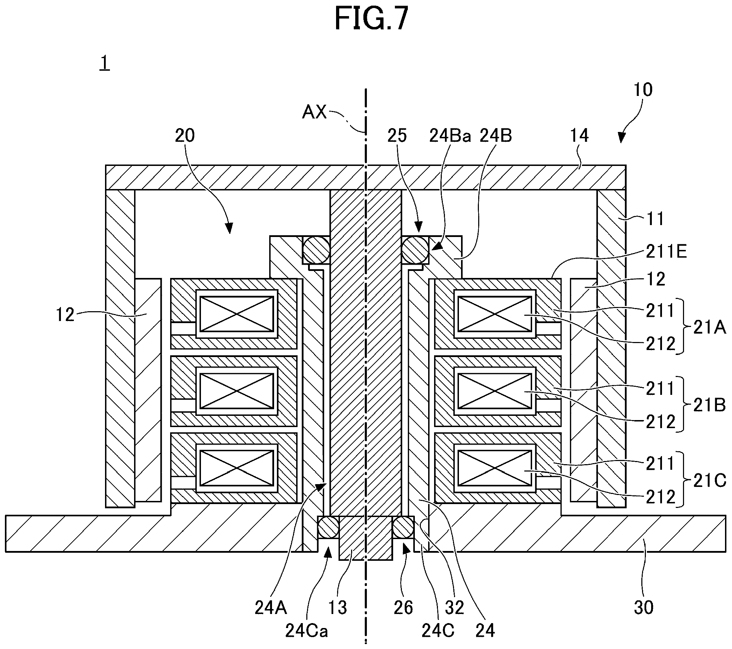

Next, a structure unique to the motor 1 according to the third embodiment will be described with reference to FIG. 7. FIG. 7 is a longitudinal sectional view illustrating an example of the configuration of the motor 1 according to the third embodiment. Hereinafter, with regard to the motor 1 according to the third embodiment, changes from the motor 1 according to the first embodiment will be described.

As illustrated in FIG. 7, in the motor 1 according to the third embodiment, the inner diameter of the first bearing 25 is larger than that of the second bearing 26. Therefore, in the motor 1 according to the third embodiment, the outer diameter of the end portion of the rotary shaft member 13 on the side of the first bearing 25 is larger than the outer diameter of the end portion on the side of the second bearing 26.

Particularly, as illustrated in FIG. 7, in the motor 1 according to the third embodiment, the outer diameter of the middle portion (the portion between the end portion on the side of the first bearing 25 and the end portion on the side of the second bearing 26) of the rotary shaft member 13 is equal to the outer diameter of the end portion on the side of the first bearing 25. That is, in the motor 1 according to the third embodiment, the rotary shaft member 13 has a shape (what is referred to as a stepped shape) that is generally large in diameter and partially smaller in diameter at the end portion on the side of the second bearing 26.

Thus, the motor 1 according to the third embodiment can enhance the strength of the rotary shaft member 13 by making the rotary shaft member 13 generally large in diameter, for example, and can prevent the occurrence of defects such as rotational shaking.

Further, the motor 1 according to the first embodiment can reduce the size of the second bearing 26 which is the low-load side, so that the cost of the second bearing 26 can be reduced.

### [Application example of the motor 1 to a fan apparatus]

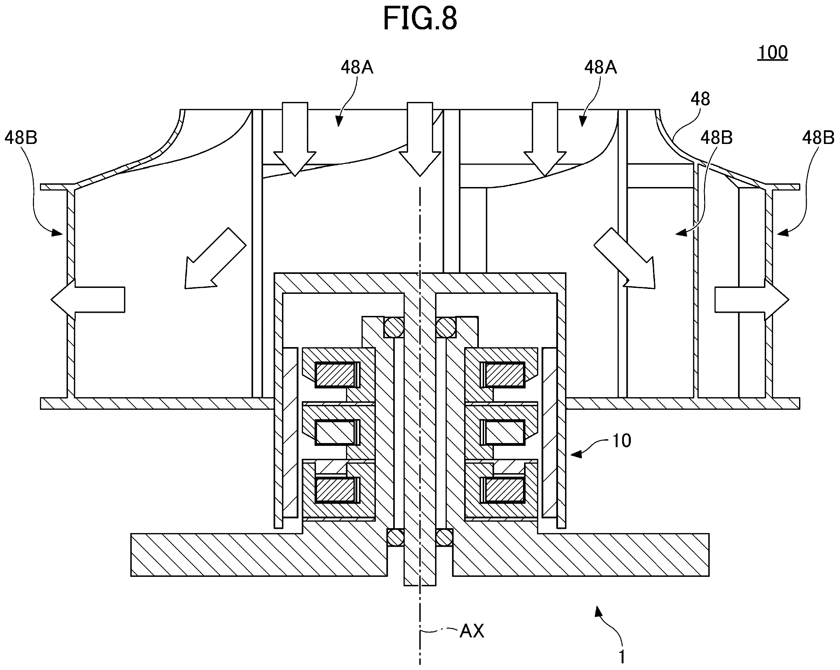

Next, an application example of the motor 1 to a fan apparatus 100 according to one embodiment will be described with reference to FIG. 8. FIG. 8 is a longitudinal sectional view illustrating an example of the configuration of the fan apparatus 100 according to one embodiment.

The fan apparatus 100 illustrated in FIG. 8 can be used, for example, in an air conditioner, a refrigeration apparatus, or the like. As illustrated in FIG. 8, the fan apparatus 100 includes the motor 1 according to one embodiment and a fan 48 (impeller). In the fan apparatus 100, any of the motors 1 described in the first to third embodiments can be used.

As illustrated in FIG. 8, in the fan apparatus 100, by attaching the fan 48 to the rotor 10, the motor 1 can rotate the fan 48 integrally with the rotor 10 to blow air.

In the example illustrated in FIG. 8, in the fan 48, the rotor 10 is attached to one end side in the axial direction of the rotation axis AX, and an intake port 48A is provided on the other end side in the axial direction of the rotation axis AX. In the fan 48, a plurality of exhaust ports 48B are provided along the circumferential direction of the outer peripheral surface.

When the fan 48 is rotated by the drive of the motor 1, as illustrated by an arrow in FIG. 8, the gas sucked in through the intake port 48A can be blown outward in the radial direction of the fan 48 from the exhaust ports 48B.

As described above, in the fan apparatus 100 according to one embodiment, the fan 48 attached to the rotor 10 of the motor 1 increases the load applied to the rotor 10, and a high load is applied to the first bearing 25 supporting one end side of the rotary shaft member 13. Therefore, the fan apparatus 100 according to one embodiment can enhance the load bearing property of the first bearing 25 against a high load by enlarging the size of the first bearing 25 on the high load side by using the motor 1 according to one embodiment for driving the rotation of the fan 48.

### [Other embodiments]

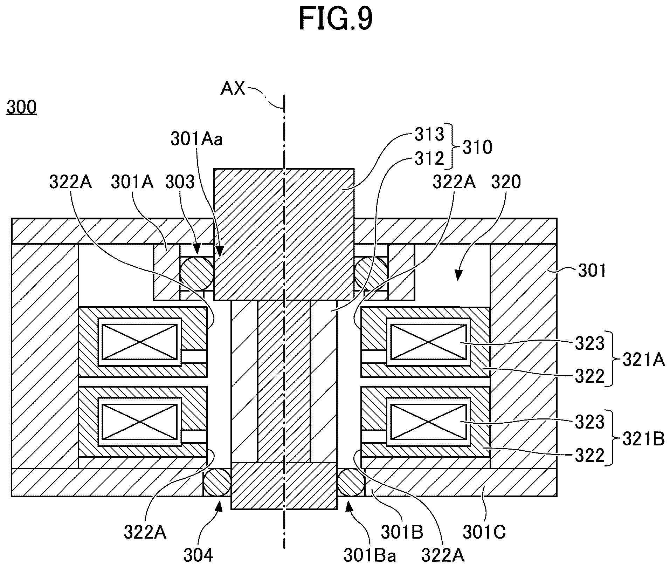

FIG. 9 is a longitudinal sectional view illustrating an example of a configuration of a motor 300 according to another embodiment. The motor 300 illustrated in FIG. 9 is what is referred to as an inner rotor type claw-pole motor. The motor 300 includes a housing 301, a rotor 310, and a stator 320. The motor 300 differs from the motor 1, which is an outer rotor type claw-pole motor, in that the rotor 310 (a permanent magnet 312 and a rotary shaft member 313) rotates inside the stator 320 (a plurality of stacked stator units 321) having a cylindrical shape, inside the housing 301.

The housing 301 has a cylindrical shape with both ends closed in the axial direction. The rotor 310 and the stator 320 are arranged inside the housing 301. The stator 320 is formed of a compacted magnetic core and may be fixed to the housing 301 by burning, pressing, or the like. The rotary shaft member 313 of the rotor 310 is provided through the center of the housing 301. Both ends of the rotary shaft member 313 are rotatably supported by a first bearing 303 provided at one end portion of the housing 301 in the axial direction of the rotary shaft member 313 and a second bearing 304 provided at the other end portion of the housing 301. A wall portion of the housing 301 provided with the second bearing 304 (a wall portion orthogonal to the rotation axis AX) functions as a "fixing member 301C" to which the stator 320 is fixed. The stator 320 may be held by a first bearing holder 301A and the fixing member 301C.

The first bearing 303 is held by the first bearing holder 301A provided at one end side (high addition side) of the housing 301 in the axial direction of the rotary shaft member 313. Specifically, the first bearing holder 301A has a circular opening 301Aa centered on the rotation axis AX. The inner diameter of the opening 301Aa is slightly smaller than the outer diameter of the first bearing 303. Thus, the first bearing holder 301A can hold the first bearing 303 by pressing the first bearing 303 into the opening 301Aa. The first bearing holder 301A may not be in contact with the stator core 322 in the axial direction, and may be separated from the stator core 322 by a small separation distance (for example, less than 1 mm).

The second bearing 304 is held by a second bearing holder 301B provided on the other end side (low addition side) of the housing 301 in the axial direction of the rotary shaft member 313. Specifically, the second bearing holder 301B has a circular opening 301Ba centered on the rotation axis AX. The inner diameter of an opening 301Ba is slightly smaller than the outer diameter of the second bearing 304. Thus, the second bearing holder 301B can hold the second bearing 304 by pressing the second bearing 304 into the opening 301Ba.

The rotor 310 is arranged inside the housing 301, inside the stator 320 in the radial direction. The rotor 310 has the permanent magnet 312 and the rotary shaft member 313. The permanent magnet 312 has a cylindrical shape. The rotary shaft member 313 is arranged in the cylinder of the permanent magnet 312. The permanent magnet 312 rotates together with the rotary shaft member 313. The permanent magnet 312 faces the inner peripheral surface (a claw magnetic pole 322A) of the stator 320 (a plurality of the stator units 321).

The stator 320 is arranged outside the rotor 310 in the radial direction inside the housing 301. The stator 320 has a generally cylindrical shape. The stator 320 has a plurality of claw-pole type stator units 321 stacked in the axial direction. In the example illustrated in FIG. 9, the stator 320 has two claw-pole type stator units 321A and 321B stacked in the axial direction. Each stator unit 321 includes a pair of stator cores 322 and a winding wire 323, similar to the stator unit 21 provided in the motor 1. However, as illustrated in FIG. 9, in the stator core 322, the plurality of claw magnetic poles 322A are arranged at equal intervals in the circumferential direction on the inner peripheral surface of the stator core 322 so as to face the permanent magnet 312 provided in the rotor 310.

As illustrated in FIG. 9, the outer diameters of the first bearing 303 and the first bearing holder 301A are larger than the inner diameters of the through holes of the stator core 322. Accordingly, the first bearing 303 and the first bearing holder 301A overlap with a part of the end face 322E of the stator core 322 closest to the first bearing holder 301A in the axial view.

Thus, the motor 300 according to another embodiment can hold the first bearing 303 having a relatively large size by the first bearing holder 301A, by making the outer diameter of the first bearing holder 301A larger than the inner diameter of the through hole of the stator core 322.

For example, in the example illustrated in FIG. 9, the outer diameter of the first bearing 303 is larger than the inner diameter of the through hole of the stator core 322. The outer diameter of the first bearing 303 is larger than the outer diameter of the second bearing 304.

Thus, the motor 300 according to another embodiment can increase the size of the first bearing 303 which is a high load side because the first bearing 303 is close to the center of gravity side of a rotating body (not illustrated) such as a fan attached to the rotary shaft member 313, particularly when the motor 300 is installed sideways, and thus the load bearing property of the first bearing 303 can be enhanced. The outer diameters of the first bearing 303 and the second bearing 304 may be larger than the inner diameter of the winding wire 323.

In the motor 300 according to another embodiment, the inner diameter of the first bearing 303 is larger than the inner diameter of the second bearing 304. Therefore, in the motor 300 according to another embodiment, the outer diameter of the end portion of the rotary shaft member 313 on the side of the first bearing 303 is larger than the outer diameter of the end portion on the side of the second bearing 304.

Particularly, in the motor 300 according to another embodiment, the outer diameter of the middle portion (the portion between the end portion on the side of the first bearing 303 and the end portion on the side of the second bearing 304) of the rotary shaft member 313 is smaller than that of the end portion on the side of the first bearing 303. That is, in the motor 300 according to another embodiment, the rotary shaft member 313 has an overall small diameter and a partially larger diameter at the end portion on the side of the first bearing 303 (what is referred to as a stepped shape).

Accordingly, the motor 300 according to another embodiment can make the inner diameter of the stator core 322 relatively small by making the rotary shaft member 313 have an overall small diameter. Therefore, the motor 300 according to another embodiment can increase the size in the radial direction of the winding wire 323 arranged in the space surrounded by the housing 301. The outer diameter of the middle portion (the portion between the end portion on the side of the first bearing 303 and the end portion on the side of the second bearing 304) of the rotary shaft member 313 may be equal to the outer diameter of the end portion on the side of the second bearing 304.

The motor 300 according to another embodiment is a claw-pole motor, and, therefore, the winding wire 323 does not protrude from the end face of the stator core 322. Therefore, in the motor 300 according to another embodiment, the first bearing holder 301A can be "arranged at a distance smaller than the difference between the radius of the inner circumference and the radius of the outer circumference of the winding wire in the axial direction, with respect to the stator core 322", which cannot be realized by the conventional centralized winding stator, and the motor 300 can be reduced in size in the axial direction.

The motor 300 according to another embodiment is an inner rotor type claw-pole motor, and, therefore, the motor 300 can be used not only for a fan apparatus but also for a compression apparatus or the like provided in a refrigeration apparatus or the like.

### [Modified example of the motor 300]

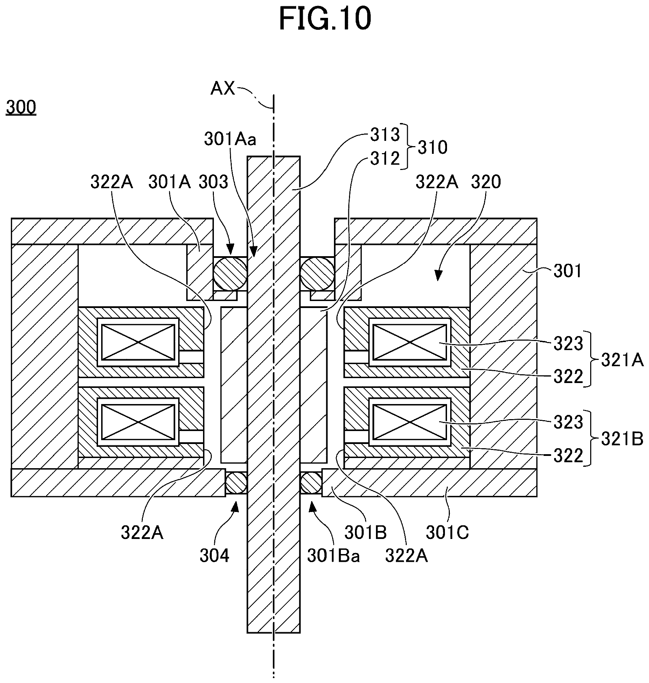

Next, a modified example of the motor 300 according to another embodiment will be described with reference to FIG. 10. FIG. 10 is a longitudinal sectional view illustrating a modified example of the motor 300 according to another embodiment.

As illustrated in FIG. 10, in the motor 300 according to the present modified example, the inner diameter of the first bearing 25 is equal to the inner diameter of the second bearing 26. Therefore, in the motor 300 according to the present modified example, the outer diameter of the end portion of the rotary shaft member 13 on the side of the first bearing 25 is equal to the outer diameter of the end portion on the side of the second bearing 26. Particularly, as illustrated in FIG. 10, in the motor 300 according to the present modified example, the outer diameter of the rotary shaft member 13 is generally constant.

Thus, for example, in the motor 300 according to the present modified example, the manufacturing cost of the rotary shaft member 13 can be reduced. Further, for example, in the motor 300 according to the present modified example, the rotary shaft member 13 can be inserted into the housing 301 from both the opening 301Aa on the side of the first bearing 25 and the opening 301Ba on the side of the second bearing 26.

### [Application example of the motor 300 to a fan apparatus]

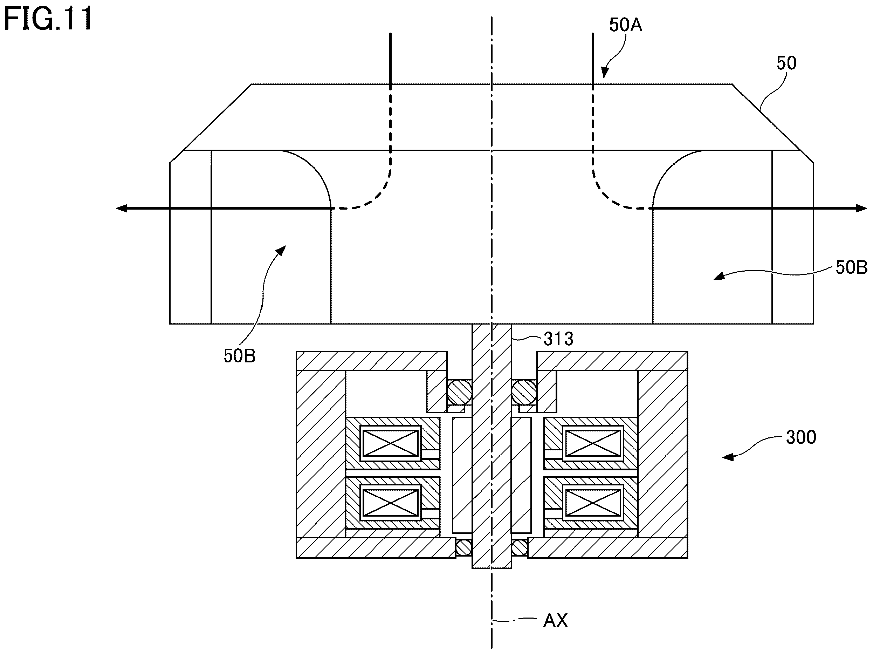

Next, an application example of the motor 300 to a fan apparatus 120 according to another embodiment will be described with reference to FIG. 11. FIG. 11 is a longitudinal sectional view illustrating an example of a configuration of a fan apparatus 120 according to one embodiment.

The fan apparatus 120 illustrated in FIG. 11 can be used, for example, in an air conditioner, a refrigeration apparatus, etc. As illustrated in FIG. 11, the fan apparatus 120 according to one embodiment includes the motor 300 according to another embodiment and a fan 50 (impeller).

As illustrated in FIG. 11, the fan apparatus 120 according to one embodiment rotates the fan 50 integrally with the rotary shaft member 313 by attaching the fan 50 to one end of the rotary shaft member 313 provided in the motor 300, and can blow air.

In the example illustrated in FIG. 11, the fan 50 has the rotary shaft member 313 attached to one end side in the axial direction of the rotation axis AX, and an intake port 50A provided on the other end side in the axial direction of the rotation axis AX. The fan 50 is provided with a plurality of exhaust ports 50B along the circumferential direction of the outer peripheral surface.

When the fan 50 is rotated by the drive of the motor 300, as illustrated by an arrow in FIG. 11, gas sucked in through the intake port 50A can be blown outward in the radial direction of the fan 50 from the exhaust port 50B.

As described above, in the fan apparatus 120 according to one embodiment, when the fan 50 is attached to the rotary shaft member 313 of the motor 300, the load applied to the rotary shaft member 313 increases, and the first bearing 303 supporting one end portion of the rotary shaft member 313 has a high load. Therefore, the fan apparatus 120 according to one embodiment can enhance the load bearing property of the first bearing 303 against a high load by enlarging the size of the first bearing 303 on the high load side by using the motor 300 according to another embodiment for driving the rotation of the fan 50.

### [Application example of the motor 300 to a compression apparatus]

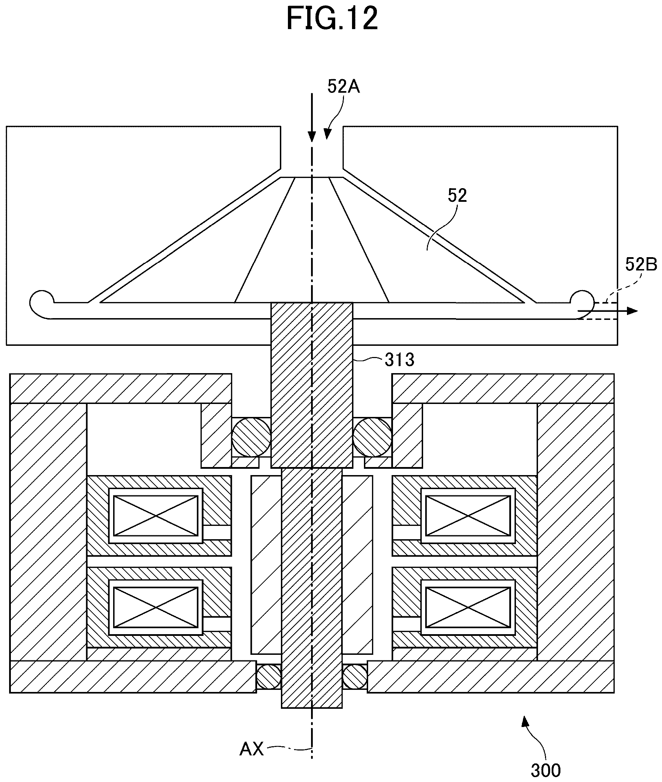

Next, an application example of the motor 300 according to another embodiment to a compression apparatus 140 will be described with reference to FIG. 12. FIG. 12 is a longitudinal sectional view illustrating an example of the configuration of the compression apparatus 140 according to one embodiment.

The compression apparatus 140 illustrated in FIG. 12 can be used, for example, in an air conditioner, a refrigeration apparatus, etc. As illustrated in FIG. 12, the compression apparatus 140 according to one embodiment includes the motor 300 according to another embodiment and an impeller 52 (compression mechanism).

As illustrated in FIG. 12, the compression apparatus 140 according to one embodiment rotates the impeller 52 integrally with the rotary shaft member 313 by attaching the impeller 52 to one end of the rotary shaft member 313 provided in the motor 300, so that the fluid can be compressed by the impeller 52.

In the example illustrated in FIG. 12, the rotary shaft member 313 is attached to one end side of the impeller 52 in the axial direction of the rotation axis AX.

The impeller 52 is rotated by the drive of the motor 300, and as illustrated by an arrow in FIG. 12, the fluid flowing in from an inlet 52A provided on the other end side in the axial direction of the rotation axis AX can flow out from an outlet 52B provided on the outside in the radial direction of the impeller 52.

As described above, in the compression apparatus 140 according to one embodiment, when the impeller 52 is attached to the rotary shaft member 313 of the motor 300, the load applied to the rotary shaft member 313 increases, and a high load is applied to the first bearing 303 supporting one end side of the rotary shaft member 313. Therefore, in the compression apparatus 140 according to one embodiment, by enlarging the size of the first bearing 303 on the high load side by using the motor 300 according to another embodiment for driving the rotation of the impeller 52, the load bearing property of the first bearing 303 against a high load can be enhanced.

### [Application example to refrigeration apparatus]

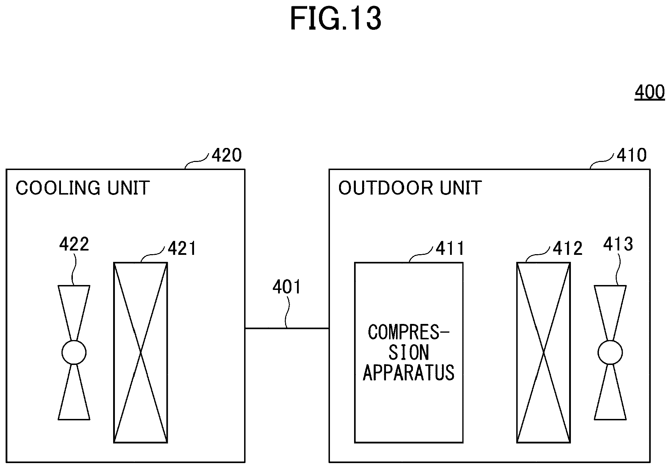

Next, with reference to FIG. 13, an application example of the motor 1 according to an embodiment and the motor 300 according to another embodiment to a refrigeration apparatus will be described. FIG. 13 is a diagram illustrating a schematic configuration of a refrigeration apparatus 400 according to an embodiment.

The refrigeration apparatus 400 illustrated in FIG. 13 is an apparatus for cooling air in a chamber to be cooled (for example, refrigeration apparatuses, freezers, showcases, etc.). As illustrated in FIG. 13, the refrigeration apparatus 400 includes an outdoor unit 410 and a cooling unit 420.

The cooling unit 420 is provided inside the chamber. The cooling unit 420 includes a usage heat exchanger 421 and an in-chamber fan 422 (an example of a "fan apparatus"). The usage heat exchanger 421 cools the air inside a chamber by a flowing refrigerant supplied from the outdoor unit 410 through a piping 401. The in-chamber fan 422 blows the air cooled by the usage heat exchanger 421 into the chamber by rotating the impeller.

The outdoor unit 410 is provided outside the chamber. The outdoor unit 410 includes a compression apparatus 411, an outdoor heat exchanger 412, and an outdoor fan 413 (an example of a "fan apparatus"). The compression apparatus 411 includes a compression mechanism (not illustrated) that rotates to compress a refrigerant (an example of a "fluid"), and compresses a refrigerant supplied from the cooling unit 420 through the piping 401 by using the compression mechanism. As the refrigerant compressed by the compression apparatus 411 flows, the outdoor heat exchanger 412 releases the heat of the refrigerant to the outside air. The outdoor fan 413 blows the outside air heated by the outdoor heat exchanger 412 by rotating the impeller.

In the refrigeration apparatus 400 according to one embodiment, the motor 1 according to one embodiment or the motor 300 according to another embodiment may be used as the motor for driving the rotation of the impeller provided in the in-chamber fan 422. Alternatively, the refrigeration apparatus 400 may use the fan apparatus 100 or the fan apparatus 120 in the in-chamber fan 422. Thus, the refrigeration apparatus 400 according to one embodiment can improve the load bearing property of the bearing on the high load side of the motor for driving the rotation of the impeller provided in the in-chamber fan 422.

In the refrigeration apparatus 400 according to one embodiment, the motor 1 according to one embodiment or the motor 300 according to another embodiment may be used for driving the rotation of the impeller provided in the external fan 413. Alternatively, the refrigeration apparatus 400 may use the fan apparatus 100 or the fan apparatus 120 as the external fan 413. Thus, the refrigeration apparatus 400 according to one embodiment can improve the load bearing property of the bearing on the high load side of the motor for driving the rotation of the impeller provided in the external fan 413.

In the refrigeration apparatus 400 according to one embodiment, the motor 300 according to another embodiment may be used for driving the rotation of the compression mechanism provided in the compression apparatus 411. Alternatively, the refrigeration apparatus 400 may use the compression apparatus 140 as the compression apparatus 411. Thus, the refrigeration apparatus 400 according to one embodiment can improve the load bearing property of the bearing on the high load side of the motor for driving the rotation of the compression mechanism provided in the compression apparatus 411.

### [Functions]

Next, the functions of the motor 1, the motor 300, the compression apparatus 140, the fan apparatus 100, the fan apparatus 120, and the refrigeration apparatus 400 according to the present embodiment will be described.

The motor 1, 300 according to the present embodiment is provided with the rotor 10, 310 configured to freely rotate around the rotary shaft member 13, 313, the stator 20, 320 including the claw-pole type stator unit 21, 321 including the winding wire 212, 323 annularly wound around the rotary shaft member 13, 313, and the stator core 211, 322 provided so as to surround the winding wire 212, 323 and having a through hole piercing around the rotary shaft member 13, 313, and the first bearing holder 24B, 301A provided on one end side of the stator 20, 320 in the axial direction of the rotary shaft member 13, 313 and holding the first bearing 25, 303 rotatably supporting the rotary shaft member 13, 313, wherein the first bearing 25, 303 and the first bearing holder 24B, 301A are arranged outside in the axial direction relative to the stator core 211, 322, and the outer diameters of the first bearing 25, 303 and the first bearing holder 24B, 301A are larger than the inner diameter of the through hole of the rotary shaft member 13, 313.

Accordingly, the motor 1, 300 according to the present embodiment can increase the size of the first bearing 25, 303 that is the high load side, and thus can enhance the load bearing property of the first bearing 25, 303.

In the motor 1, 300 according to the present embodiment, the outer diameter of the first bearing 25, 303 or the first bearing holders 24B, 301A may be larger than the inner diameter of the winding wire 212,323, and the axial distance between the first bearing 25, 303 and the stator core 211, 322 may be smaller than the difference between the radius of the inner periphery and the radius of the outer periphery of the winding wire 212, 323.

Accordingly, the motor 1, 300 according to the present embodiment can further increase the size of the first bearing 25, 303 and reduce the size of the motor 1, 300 in the axial direction.

In the motor 1, 300 according to the present embodiment, the first bearing 25, 303 or the first bearing holder 24B, 301A may be in contact with the end face of the stator core 211, 322.

Accordingly, the motor 1, 300 according to the present embodiment can further reduce the size of the motor 1, 300 in the axial direction.

Further, the motor 1, 300 according to the present embodiment may include the fixing member 30, 301C for supporting the stator 20, 320, the fixing member 30, 301C being provided on the opposite side of the first bearing 25, 303 with respect to the stator 20, 320 in the axial direction of the rotary shaft member 13, 313, and the stator 20, 320 may be sandwiched by the first bearing holder 24B, 301A and the fixing member 30, 301C.

Thus, the motor 1, 300 according to the present embodiment can regulate the movement of the stator 20, 320 in the axial direction of the rotary shaft member 13, 313.

In the motor 1, 300 according to the present embodiment, the stator core 211, 322 of the stator unit 21, 321 may be a compacted body formed by compressing magnetic powder.

Accordingly, the motor 1, 300 according to the present embodiment has a configuration in which the stator core 211, 322 receives heat generated by the winding wire 212, 323 by using the compacted body and tends to increase in temperature. The first bearing holder 24B, 301A is provided in the vicinity of the stator core 211, 322, and, therefore, the heat of the stator core 211, 322 can be radiated to the first bearing holder 24B, 301A, thereby preventing the temperature rise of the stator unit 21, 321.

In the motor 1, 300 according to the present embodiment, the stator 20, 320 may have two or more stator units 21, 321 stacked in the axial direction of the rotary shaft member 13, 313.

Accordingly, the motor 1, 300 according to the present embodiment has a configuration in which the rotary shaft member 13, 313 is extended so that a higher load is applied to the first bearing 25, 303, and, therefore, the effect of enhancing the load bearing property of the first bearing 25, 303 obtained by increasing the size of the first bearing 25, 303 is more useful.

In the motor 1 according to the present embodiment, the rotor 10 may be configured to rotate outside the stator 20 in the radial direction of the rotary shaft member 13.

Accordingly, the motor 1 according to the present embodiment is configured to apply a higher load to the first bearing 25 due to the weight of the rotor 10, and, therefore, the effect of enhancing the load bearing property of the first bearing 25 obtained by increasing the size of the first bearing 25 is more useful.

The motor 1 according to the present embodiment may also include the fan 48 attached to the outer surface of the rotor 10.

Accordingly, the motor 1 according to the present embodiment has a configuration in which a higher load is applied to the first bearing 25 due to the weight of the rotor 10 and the fan 48, and, therefore, the effect of enhancing the load bearing property of the first bearing 25 obtained by increasing the size of the first bearing 25 is more useful.

Further, the motor 1, 300 according to the present embodiment includes the second bearing holder 24C, 301B provided on the opposite side of the first bearing 25, 303 with respect to the stator 20, 320 in the axial direction of the rotary shaft member 13, 313, the second bearing holder 24C, 301B holding the second bearing 26, 304 rotatably supporting the rotary shaft member 13, 313, and the load applied to the first bearing 25, 303 may be larger than that applied to the second bearing 26, 304.

Accordingly, the motor 1, 300 according to the present embodiment has a configuration in which a higher load is applied to the first bearing 25, 303, and, therefore, the effect of enhancing the load bearing property of the first bearing 25, 303 obtained by increasing the size of the first bearing 25, 303 is more useful.

In the motor 1, 300 according to the present embodiment, the outer diameter of the second bearing 26, 304 or the second bearing holder 24C, 301B may be smaller than the inner diameter of the winding wire 212, 323.

Accordingly, the motor 1, 300 according to the present embodiment can use a relatively small second bearing 26, 304 held by the second bearing holder 24C, 301B. Therefore, the motor 1, 300 according to the present embodiment can reduce the cost of the second bearing 26, 304, for example.

In the motor 1, 300 according to the present embodiment, the outer diameter of the second bearing 26, 304 or the second bearing holders 24C, 301B may be smaller than the inner diameter of the through hole of the stator core 211, 322.

Accordingly, the motor 1, 300 according to the present embodiment can use a relatively small second bearing 26, 304 held by the second bearing holders 24C, 301B. Therefore, the motor 1, 300 according to the present embodiment can reduce the cost of the second bearing 26, 304, for example.

Further, the compression apparatus 140 according to the present embodiment includes the impeller 52 for compressing a fluid by rotating, and the motor 300 for driving the rotation of the impeller 52.

Accordingly, the compression apparatus 140 according to the present embodiment can increase the size of the first bearing 303, which is a high-load side, in the motor 300 for driving the rotation of the impeller 52, and thereby enhance the load bearing property of the first bearing 303.

Further, the fan apparatus 100 according to the present embodiment includes the fan 48 for blowing air by rotating and the motor 1 for driving the rotation of the fan 48.

Accordingly, the fan apparatus 100 according to the present embodiment can increase the size of the first bearing 25, which is a high-load side, in the motor 1 for driving the rotation of the fan 48, thereby enhancing the load bearing property of the first bearing 25.

The fan apparatus 120 according to the present embodiment is provided with the fan 50 for blowing air by rotating and the motor 300 for rotating and driving the fan 48.

Accordingly, the fan apparatus 120 according to the present embodiment can increase the size of the first bearing 303, which is a high-load side, in the motor 300 for rotating and driving the fan 50, thereby enhancing the load bearing property of the first bearing 303.

Further, the refrigeration apparatus 400 according to the present embodiment includes the compression apparatus 140, the fan apparatus 100, or the fan apparatus 120.

Accordingly, the refrigeration apparatus 400 according to the present embodiment can increase the size of the first bearing 25 or the first bearing 303, which is a high-load side of the motor 1 or the motor 300 used for the compression apparatus 140, the fan apparatus 100, or the fan apparatus 120, and thereby enhance the load bearing property of the first bearing 25 or the first bearing 303.

### [Modifications/changes]

Although the embodiments have been described above, it will be understood that various changes in modes and details are possible without departing from the purpose and scope of the claims.

The present international application is based upon and claims priority to Japanese Patent Application No. 2021-054833 filed on March 29, 2021, the entire contents of which are incorporated herein by reference.

### [Reference Signs List]

1 motor
10 rotor
11, 11A to 11C rotor core
12 permanent magnet
13 rotary shaft member
13A inner space
13B hole
13C through hole
13D opening
14 coupling member
20 stator
21, 21A to 21C stator unit
211 stator core
211A yoke portion
211B claw magnetic pole
211C yoke portion
211D insertion hole
212 winding wire
22 interphase member
22A UV interphase member
22B VW interphase member
23 end member
24 insertion member
24A inner space
24B first bearing holder
24C second bearing holder
25 first bearing
26 second bearing
30 fixing member
48, 50 fan
48A, 50A intake port
48B, 50B exhaust port
52 impeller
52A inlet
52B outlet
100 fan apparatus
120 fan apparatus
140 compression apparatus
300 motor
301 housing
301A first bearing holder
301Aa opening
301B second bearing holder
301Ba opening
301C fixing member
303 first bearing
304 second bearing
310 rotor
312 permanent magnet
313 rotating shaft member
320 stator
321 stator unit
322 stator core
322A claw magnetic pole
322E end face
323 winding wire
400 refrigeration apparatus
410 outdoor unit
411 compression device
412 outdoor heat exchanger
413 outdoor fan
420 cooling unit
421 usage heat exchanger
422 in-chamber fan
AX rotation axis

## Claims

1. A motor comprising:
a rotor configured to freely rotate around a rotary shaft;
a stator including a stator unit of a claw-pole type, the stator unit including a winding wire that is annularly wound around the rotary shaft and a core provided so as to surround the winding wire, the core having a through hole piercing the core around the rotary shaft; and
a first bearing holder provided at one end side of the stator in an axial direction of the rotary shaft and configured to hold a first bearing rotatably supporting the rotary shaft, wherein
the first bearing and the first bearing holder are arranged on an outside in the axial direction with respect to the core, and
an outer diameter of the first bearing or the first bearing holder is larger than an inner diameter of the through hole of the core.

2. The motor according to claim 1, wherein
the outer diameter of the first bearing or the first bearing holder is larger than an inner diameter of the winding wire, and
a distance in the axial direction between the first bearing holder and the core is shorter than a difference between a radius of an inner circumference and a radius of an outer circumference of the winding wire.

3. The motor according to claim 1 or 2, wherein the first bearing or the first bearing holder is in contact with an edge face of the core.

4. The motor according to any one of claims 1 to 3, further comprising:
a fixing member provided on an opposite side of the first bearing with respect to the stator in the axial direction of the rotary shaft, the fixing member being configured to support the stator, and
the stator is sandwiched by the first bearing holder and the fixing member.

5. The motor according to any one of claims 1 to 4, wherein
the core of the stator unit is formed by using a compacted body formed by compressing magnetic powder.

6. The motor according to any one of claims 1 to 5, wherein the stator includes two or more of the stator units that are stacked in the axial direction of the rotary shaft.

7. The motor according to any one of claims 1 to 6, wherein the rotor is configured to rotate on an outside of the stator in a radial direction of the rotary shaft.

8. The motor according to claim 7, further comprising:
a fan attached to an outer surface of the rotor.

9. The motor according to any one of claims 1 to 8, further comprising:
a second bearing holder provided on an opposite side of the first bearing with respect to the stator in the axial direction of the rotary shaft and configured to hold a second bearing rotatably supporting the rotary shaft, wherein
a load applied to the first bearing is greater than a load applied to the second bearing.

10. The motor according to claim 9, wherein an outer diameter of the second bearing or the second bearing holder is smaller than an inner radius of the winding wire.

11. The motor according to claim 10, wherein the outer diameter of the second bearing or the second bearing holder is smaller than the inner diameter of the through hole of the core.

12. A compression apparatus comprising:
a compression mechanism configured to compress a fluid by rotating; and
the motor according to any one of claims 1 to 6, 9, and 10 configured to drive a rotation of the compression mechanism.

13. A fan apparatus comprising:
an impeller configured to blow air by rotating; and
the motor according to any one of claims 1 to 11 configured to rotatably drive the impeller.

14. A refrigeration apparatus comprising:
the compression apparatus according to claim 12 or the fan apparatus according to claim 13.
